# EUROPÄISCHE PATENTSCHRIFT

(11) **EP 1 344 873 B1**
(45) Veröffentlichungstag und Bekanntmachung des Hinweises auf die Patenterteilung: **30.09.2015**
(21) Anmeldenummer: 03004587.6
(22) Anmeldetag: 28.02.2003
(51) Int. Cl.: E03D 5/00, E03B 1/04

(54) **Anlage zur Wiederverwertung von Grauwasser**
Device for recicling greywater
Dispositif de recyclage des eaux grises

(30) Priorität: 11.03.2002 DE 10211608
(43) Veröffentlichungstag der Anmeldung: 17.09.2003
(73) Patentinhaber: Hansgrohe SE, 77761 Schiltach (DE)
(72) Erfinder: Jeltsch, Thomas, 88094 Oberteuringen (DE); Zwerenz, Achim, 78655 Dunningen (DE)
(74) Vertreter: Patentanwälte Ruff, Wilhelm, Beier, Dauster & Partner

(56) Entgegenhaltungen:
- EP-A- 0 732 457
- EP-A- 0 894 904
- EP-A- 1 036 888
- WO-A-93/11310
- DE-A- 19 740 061
- DE-A- 19 836 634
- US-A- 3 955 715

## Beschreibung

Die Erfindung geht aus von einer Grauwasseranlage gemäß dem Oberbegriff des Anspruchs 1, mit deren Hilfe leicht verschmutztes beispielsweise aus Badewannen stammendes Wasser zur nochmaligen Verwendung innerhalb des Haushalts aufbereitet werden kann.

Es ist bereits eine Anlage zum Wiederverwerten von Grauwasser bekannt (EP 732 457). Diese Anlage enthält drei Behälter, die in ihrer Funktion hintereinander angeordnet sind. Von Behälter zu Behälter nimmt der Reinigungsgrad des Wassers zu. Die Behälter sind über Leitungen, Pumpen, Ventile oder ähnliche Einrichtungen in ihrer Funktion miteinander verbunden.

Ebenfalls bekannt ist eine derartige Anlage (EP 894904), die als kompakte Wandeinheit aufgebaut ist. In einem Gestell sind drei Behälter angeordnet. Unterhalb der drei Behälter ist ein Raum vorhanden, der die notwendigen Pumpen und Steuerungen aufnimmt.

Es ist bereits eine Wasserspeicheranlage für Regenwasser bekannt (WO 93/11310), bei der eine Vielzahl von Wasserbehältern zur Bildung eines Zauns hintereinander angeordnet sind. Der Zwischenraum zwischen je zwei Behältern kann auf einer Seite mithilfe von Abdeckstreifen abgedeckt werden. Die Behälter berühren einander nicht und sind durch jeweils zwei Leitungen miteinander verbunden.

Weiterhin bekannt ist eine Befestigungsanordnung eines Spülkastens, die zwei vertikal ausgerichtete Profilschienen aufweist. Mit diesen Profilschienen lässt sich der Spülkasten verbinden (DE 19836634).

Der Erfindung liegt die Aufgabe zu Grunde, eine Grauwasseranlage dieser Art derart auszugestalten, dass sie sich leicht und mit geringem Aufwand aufbauen und anschließen lässt. Darüber hinaus soll sie auch an ungünstige Stellen transportiert werden können.

Zur Lösung dieser Aufgabe schlägt die Erfindung eine Grauwasseranlage mit den im Anspruch 1 genannten Merkmalen vor. Weiterbildungen der Erfindung sind Gegenstand von Unteransprüchen.

Dadurch, dass die Anlage aus einzelnen Behältern und einer einzelnen Steuereinheit aufgebaut sein kann, ist es möglich, die jeweiligen Behälter auch unter engen Raumverhältnissen in entsprechende Räume zu bringen. Durch die Ausrichtmittel ist es relativ einfach möglich, die Behälter so anzuordnen, dass sie ihre korrekte Position einnehmen, in der sie dann miteinander und mit der Hausinstallation verbunden werden können. Die Ausrichtmittel können an den Behältern selbst angeordnet sein, oder aber an einer getrennt von diesen vorhandenen Einrichtung, beispielsweise einer Bodenschiene oder einer Wandschiene. Auch die Ausrichtung mit Abstandhaltern oder ähnlichen Mitteln wird von der Erfindung ins Auge gefasst. Andere Möglichkeiten der Ausrichtung sind ebenfalls denkbar.

Um auch die Steuereinheit in die Anlage mit einfachen Mitteln zu integrieren, kann erfindungsgemäß in Weiterbildung vorgesehen sein, dass auch diese die gleichen Ausrichtmittel zur Ausrichtung mit mindestens einem Speicherbehälter aufweist. Vorzugsweise kann die Steuereinheit auch zwischen zwei Speicherbehälter eingesetzt werden. Sie kann dann an beiden Seiten Ausrichtmittel aufweisen.

Die Ausrichtmittel sind vorzugsweise an beiden Seiten der Behälter komplementär zueinander ausgebildet.

Insbesondere kann in Weiterbildung der Erfindung vorgesehen sein, dass die Ausrichtmittel selbstzentrierend ausgebildet sind, so dass beim Zusammenschieben oder Zusammenrücken der einzelnen Behälter und/oder der Steuereinheit auch eine leichte Abweichung von einer korrekten Position zu der Herstellung der exakten Ausrichtung führt.

In Weiterbildung der Erfindung kann vorgesehen sein, dass die Behälter und/oder die Steuereinheit in ihrer korrekt ausgerichteten Position dann auch mechanisch miteinander verbunden werden können. Dadurch wird aus den einzelnen Behältern ein kompakter in sich geschlossener und sehr stabiler Block. Es ist dabei zu berücksichtigen, dass die Behälter gegebenenfalls vollständig mit Wasser gefüllt sind, also ein großes Gewicht aufweisen.

Zur Erhöhung der Stabilität kann erfindungsgemäß in Weiterbildung vorgesehen sein, dass die Behälter in der ausgerichteten Position flächig aneinander anliegen.

Aus optischen Gründen kann vorgesehen sein, dass die ausgerichteten Behälter eine bündig verlaufende durchgehende Vorderfront aufweisen.

Erfindungsgemäß kann in Weiterbildung vorgesehen sein, dass die Behälter als auf dem Boden stehende Einheiten ausgebildet sind. Hierzu können sie ein Gestell mit Füßen oder sonstigen Auflageflächen aufweisen. Sie können aber auch so gestaltet sein, dass sie mit ihrem Boden direkt auf dem Boden eines Raums aufliegen können.

Erfindungsgemäß kann vorgesehen sein, dass die Ausrichtmittel an den Seitenwänden des Behälters angeordnet und/oder ausgebildet sind. Dies macht die Verwendung zusätzlicher Mittel wie der beispielsweise eingangs erwähnten Abstandshalter oder dergleichen überflüssig.

Zur mechanischen Verbindung der Behälter miteinander und/oder der Steuereinheit können Verbindungsmittel vorgesehen sein, die beispielsweise als Klammern, Spangen oder sonstige Mittel an den Seiten, das heißt der Oberseite und der Unterseite, der Vorderseite oder der Rückseite der Behälter angeordnet sind. Ebenfalls möglich ist es, ein Spannband von außen um die Behälter herumzulegen.

Es ist jedoch ebenfalls möglich und wird von Erfindung vorgeschlagenen, dass die Verbindungsmittel an den einander zugewandten Seitenwänden der Behälter und/oder der Steuereinheit angreifen.

Da die Behälter zur Aufnahme von Wasser bestimmt sind, und zur günstigen Raumausnutzung die Behälter eine beachtliche Höhe aufweisen, kann zur Verbesserung der Stabilität vorgesehen sein, dass die Behälter Versteifungen zur Verhinderung des Aufwölbens der Seitenwände aufweisen. Dies gilt insbesondere für die Behälter, die an den Enden einer Reihe von Behältern stehen.

Eine Versteifung kann beispielsweise dadurch erreicht werden, dass die Seitenwände eine gewisse Profilierung aufweisen. Ebenfalls möglich ist es, die Seitenwände so auszugestalten, dass eine Versteifungsschiene in sie eingelegt werden kann. Aus geometrischen Gründen verläuft diese Seitenschiene in Längsrichtung der Behälter. Um sie sehr einfach zu positionieren, können die Seitenwände der Behälter eine entsprechende Nut aufweisen, in die diese Versteifungsschiene eingelegt werden kann.

Eine weitere Möglichkeit einer wirksamen Versteifung der Behälter kann dadurch erreicht werden, dass die Seitenwände durch einen sie verbindenden Durchzug stabilisiert werden. Dieser Durchzug verläuft also durch den Behälter selbst hindurch. Bei sehr hohen Behältern kann vorgesehen sein, mehr als einen solchen Durchzug anzuordnen.

Die Durchzüge bilden eine Möglichkeit, wie die Behälter auch mechanisch miteinander verbunden werden können. Dies kann durch Verbindungsmittel geschehen, die durch den Durchzug hindurch greifen. Beispielsweise kann eine Stange durch die ausgerichteten Durchzüge aller Behälter hindurch greifen, die dann an den jeweiligen Enden mit einer Versteifungsschiene verschraubt ist.

Wie bereits eingangs erwähnt wurde, werden die Behälter durch Leitungsverbindungen miteinander funktionell verbunden. Solche Leitungsverbindungen dienen auch zur Verbindung mit der Hausinstallation beziehungsweise einem zur Kanalisation führenden Ablauf. Die Erfindung schlägt und vor, dass die Behälter derart ausgebildet und/oder angeordnet sein können, dass sie in der ausgerichteten Position Ausnehmungen freilassen, in denen diese Verbindungselemente oder sonstigen Funktionsteile Aufnahme finden können. Hierzu gehören auch Pumpen die wegen ihres elektrischen Antriebs und wegen der besseren Zugänglichkeit nicht in den Behältern angeordnet werden, sondern außerhalb der Behälter. Bei den Ausnehmungen kann es sich um horizontal oder vertikal durchgehende Schächte handeln, aber auch um räumlich begrenzte Ausnehmungen.

Die Ausnehmungen für diese Teile können gegebenenfalls auch durch Abdeckungen abgedeckt werden, falls die Ausnehmungen von der Vorderseite her zugänglich oder in sonstiger Weise sichtbar sind.

Die Ausnehmungen können als Einbuchtungen in den Behälterseitenwänden oder auch Rückwänden ausgebildet sein, oder auch dadurch, dass die Behälter einen von der eigentlich gewünschten Form nach innen abweichenden Querschnitt aufweisen.

Zur Herstellung der Wasserleitungsverbindungen zwischen den Behältern und der Hausinstallation können die Behälter Anschlüsse für diese Fluidverbindungen aufweisen. Sie können auch Anschlüsse für Steuerverbindungen aufweisen, wenn beispielsweise in einem Behälter ein Fühler für die Wasserstandshöhe angeordnet ist. Die Anschlüsse für die Leitungsverbindungen können vorzugsweise zunächst geschlossen sein, da bei der Installation eventuell noch nicht festgelegt ist, wo dieser Behälter in der Reihe von Behältern angeschlossen wird. Es können Vorkehrungen getroffen sein, diese Anschlüsse mit geringem Aufwand zu öffnen, beispielsweise durch Bohren oder durch Zertrennen mit einem Schneidwerkzeug.

Zum Anbringen von Funktionsteilen, die für die Funktion der Grauwasseranlage erforderlich oder sinnvoll sind, können Halterungen an den Behältern angeordnet sein. Diese Halterungen können sich sowohl an den Außenseiten der Behälter als auch an ihrer Innenseite befinden. Die Halterungen können so ausgebildet sein, dass sich die Funktionsteile einfach einsetzen lassen, beispielsweise durch Einschnappen. Sie können also formschlüssig oder kraftschlüssig festgelegt sein, ohne dass zusätzliche Befestigungseinrichtungen vorhanden sein müssen, für die Werkzeuge erforderlich wären.

Erfindungsgemäß können die Behälter eine Öffnung aufweisen, die durch einen Deckel abgeschlossen wird. Vorzugsweise sind diese Öffnungen in der Oberseite vorhanden. Die Öffnungen können dabei so gestaltet sein, dass die Funktionsteile durch die Öffnung hindurch in den Behälter eingesetzt und auch aus diesem wieder entnommen werden können.

Die Verbindungen zwischen den einzelnen Behältern können steckbar sein.

Erfindungsgemäß kann vorgesehen sein, dass die Behälter aus Kunststoff bestehen, vorzugsweise einstückig. Es hat sich als sonders günstig herausgestellt, die Behälter im Rotationsgussverfahren herzustellen.

Erfindungsgemäß kann vorgesehen sein, dass alle Behälter die gleiche Höhe und Tiefe aufweisen. Sie können daher beliebig miteinander kombiniert werden. Allenfalls die Breite der Behälter kann unterschiedlich sein, um je nach Größe der Räume, in denen die Anlage untergebracht wird, eine optimale Raumausnutzung zu ermöglichen.

Es ist jedoch ebenfalls möglich, dass alle Behälter gleich ausgebildet sind.

Eine weitere Möglichkeit, wie die Behälter ausgestaltet werden können, besteht darin, sie paarweise symmetrisch auszubilden.

Erfindungsgemäß können die Behälter eine solche Grundfläche aufweisen, dass vier Behälter oder drei Behälter und eine Steuereinheit auf eine Europalette passen.

In Weiterbildung der Erfindung kann ebenfalls vorgesehen sein, dass die Behälter in verbundenem Zustand transportiert werden können. Sie können dadurch auch während des Transports eine kompakte Einheit bilden, so dass zusätzliche Befestigungen erleichtert werden.

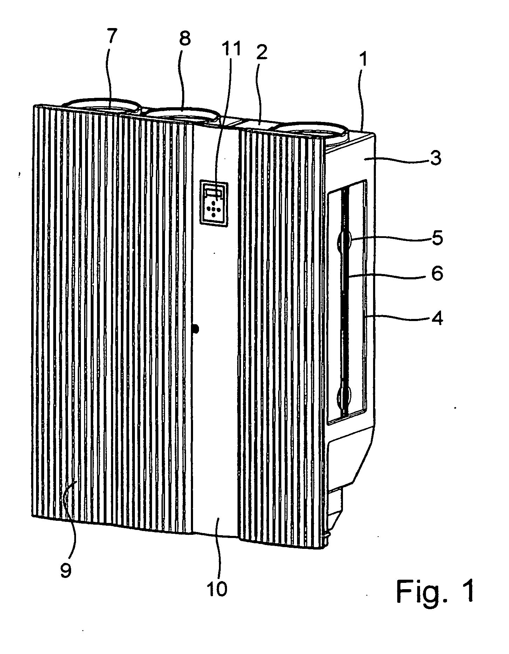

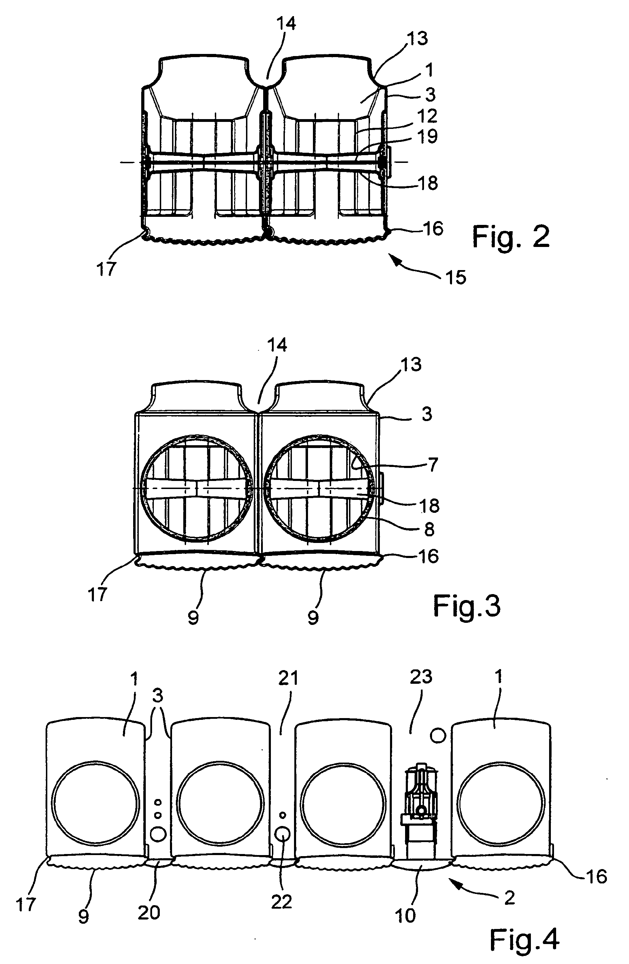

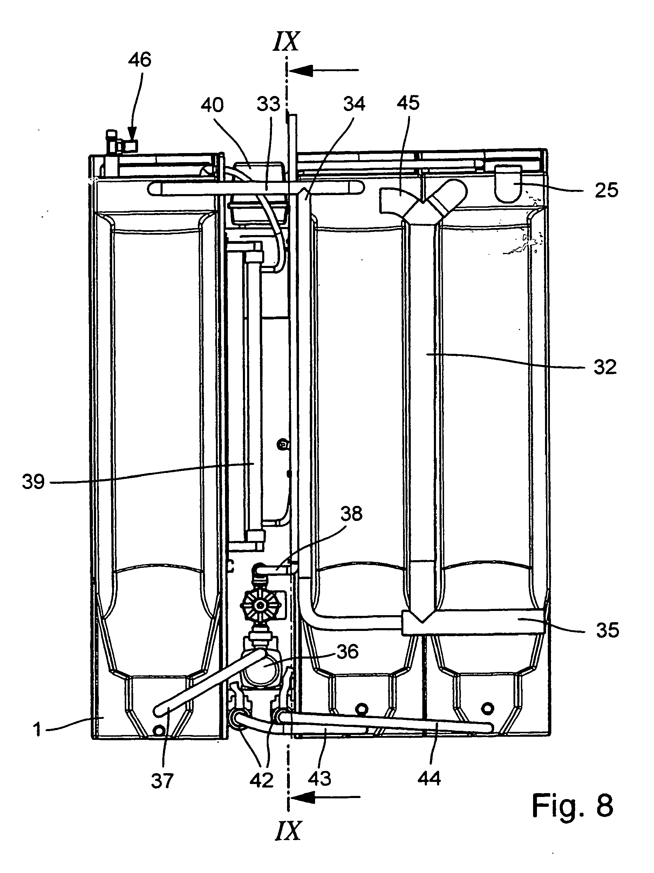

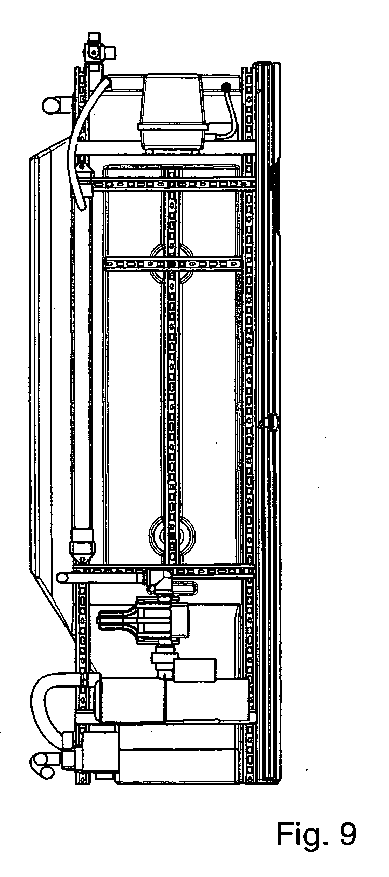

Weitere Merkmale, Einzelheiten und Vorzüge der Erfindung ergeben sich aus der folgenden Beschreibung bevorzugter Ausführungsformen der Erfindung, den Patentansprüchen und der Zusammenfassung, deren Wortlaut durch Bezugnahme zum Inhalt der Beschreibung gemacht wird, sowie anhand der Zeichnung. Hierbei zeigen:
Figur 1
   eine perspektivische Ansicht einer aus drei Behältern und einer Steuereinheit bestehenden Grauwasseranlage nach der Erfindung;
Figur 2
   einen Querschnitt durch zwei nebeneinander stehende Behälter in Höhe eines Durchzugs;
Figur 3
   eine Aufsicht auf die beiden Behälter der Figur 2 bei geöffneter Öffnung in der Oberseite;
Figur 4
   eine schematische Aufsicht auf die Anordnung von vier Behältern und einer Steuereinheit bei einer anderen Ausführungsform;
Figur 5
   eine der Figur 4 entsprechende Darstellung bei einer nochmals weiteren Ausführungsform;
Figur 6
   eine Aufsicht auf eine weitere Ausführungsform;
Figur 7
   einen Schnitt durch einen Behälter;
Figur 8
   die Rückansicht einer Anordnung einer Anlage mit drei Behältern und einer Steuereinheit;
Figur 9
   einen Schnitt durch die Anordnung der Figur 1 etwa längs Linie lX-lX in Figur 8.

Figur 1 zeigt in einer perspektivische Ansicht eine Grauwasseranlage in fertig montiertem Zustand. Die Anlage ist aufgebaut aus drei Behältern 1 und einer Steuereinheit 2. Die Behälter 1 weisen eine Querschnittsform auf, die etwa rechteckig ist. Sie enthalten Seitenwände 3, die einen äußeren ebenen Rahmen mit einer Vertiefung 4 in der Mitte bilden. In der Vertiefung ist eine in Längsrichtung der Behälter verlaufende Nut 5 vorhanden, in die eine Schiene 6 eingelegt ist. Die Schiene 6 dient zur Versteifung der Seitenwand des Behälters. Im unteren Bereich verjüngen sich die Behälter 1, um dadurch eine Art Trichter zu bilden, um die Entnahme des Wassers aus den Behältern auch auf den letzten Rest zu erleichtern.

Im Bereich der Oberseite haben die Behälter 1 eine runde Öffnung 7 mit einem zylindrischen Rand 8. Diese Öffnung 7 kann durch einen Deckel verschlossen werden. Die Öffnung 7 ist so gewählt, dass sie bis fast vollständig an den Rand der Behälter 1 reicht.

Die Vorderseite 9 der Behälter ist als in Längsrichtung mit einer Profilierung versehenes Paneel ausgebildet. Die Ränder der Paneele 9 stoßen aneinander und greifen nach Art einer Nut- und Feder Verbindung in einander ein. Dadurch wird eine optisch ansprechende Front gebildet, die keine Zwischenräume zwischen den einzelnen Bauteilen frei lässt. Die Steuereinheit 2 weist ebenfalls eine Vorderseite 10 auf, die etwa bündig in der Front der Anlage liegt. Die Vorderseite 10 der Steuereinheit 2 ist als Tür ausgebildet und kann auch in zusammengesetztem Zustand der Anlage geöffnet werden. Die Frontseite 10 der Steuereinheit 2 kann Anzeigeelemente 11 und auch Bedienelemente aufweisen.

Figur 2 zeigt nun einen Querschnitt durch zwei nebeneinander angeordnete und miteinander mechanisch verbundene Behälter 1. Die Behälter 1 verjüngen sich im Bereich ihres Bodens trichterartig, was sich aus der Zeichnung der Figur 2 durch die Knicklinien 12 ergibt. Die beiden Hinterkanten der Behälter 1 sind durch eine bogenförmige Nut 13 ausgespart, so dass sich an der Verbindungsstelle zwischen zwei Behältern ein in Längsrichtung der Behälter, das heißt von oben nach unten, verlaufender Schacht 14 ergibt. Dieser Schacht 14 dient zur Unterbringung von Verbindungsleitungen und sonstigen Einrichtungen. Die Behälter 1 können bis nahe an die Wand heran gerückt werden. Dennoch ist der Raum für diese Verbindungsleitungen durch die Aussparung 13 bzw. den Schacht 14 gegeben.

Wie die Figur 2 zeigt, ist im Bereich der rechten Vorderkante 15 jedes Behälters ein abgerundeter rippenartiger Vorsprung 16 vorhanden, der über die gesamte Höhe des Behälters durchgehend verläuft. Er verläuft exakt von oben nach unten. An der gegenüberliegenden Seite ist an der entsprechenden Stelle eine durchgehende Nut 17 vorhanden. Die Rippe 16 passt in die Nut 17 hinein. Auf diese Weise kann mit geringem Aufwand eine Ausrichtung der beiden Behälter durchgeführt werden. Die Ausrichtung kann so geschehen, dass der linke Behälter zunächst mit seinem Vorsprung 16 so orientiert wird, dass diese in die Nut 17 des rechten Behälters eingreift. Anschließend kann der Behälter, falls er noch nicht an dem nächsten Behälter flächig anliegt, um die Rippe 16 verschwenkt werden, bis die flächige Anlage an den Seitenwänden 3 erreicht ist.

Die Seitenwände 3 jedes Behälters 1 sind durch einen Durchzug 18 miteinander verbunden, der durch das Innere des Behälters hindurch geht. Der Durchzug 18 beginnt und endet in der Vertiefung 4 der Seitenwand 3. Er mündet so in den Vertiefungen 4 aus, dass seine Achse mit der Nut 5 zur Unterbringung der Versteifungsschiene 6 zusammenfällt. Ein Stab 19 oder eine entsprechende Zugstange kann durch die Durchzüge der Behälter 1 hindurch gesteckt werden. Eine Verankerung kann mit der Schiene 6 in der Weise erfolgen, dass ein Aufwölben der Seitenwände 3 jedes Behälters durch die Zugstange vermieden wird. Die Zugstange dient gleichzeitig der gegenseitigen mechanischen Verbindung der Behälter und der Sicherung gegen ein Aufwölben. Sie unterstützt in dieser Hinsicht die Durchzüge 18. Sie kann auch der gegenseitigen Ausrichtung der benachbarten Behälter dienen.

Figur 3 zeigt eine Aufsicht auf die Anordnung der Figur 2. Die Frontwände 9 der Behälter 1 sind etwas höher gezogen als die Oberseite, in der die Öffnungen 7 angeordnet sind. Es ist auch hier zu sehen, wie die Rippe 16 in die Nut 17 eingreift

Die Figur 3 zeigt, dass die Durchzüge durch die Öffnungen 7 sichtbar sind. Es ist beidseits der Durchzüge 18 noch ausreichend Platz vorhanden, um in das Innere der Behälter 1 mit Werkzeugen eingreifen zu können.

Während bei der Ausführungsform nach Figur 1 bis 3 die Behälter 1 mit ihren jeweiligen Seitenwänden 3 aneinander anliegen, zeigt die Figur 4 eine Ausführungsform mit vier Behältern 1, bei der die gegenseitige Ausrichtung der Behälter durch Abdeckungen 20 erfolgt, die mit den Vorsprüngen 16 und den Nuten 17 der Paneele 9 der Behälter 1 zusammenwirken. Die Abdeckungen 20 weisen eine Breite auf, die dem Abstand zwischen den Seitenwänden 3 benachbarter Behälter etwa gleich ist. In diesen Zwischenräumen 21 zwischen benachbarten Behältern sind Leitungen 22 vorhanden, die der Fluidikverbindung zwischen den Behältern und der Hausinstallation dienen.

Auch hier ist in einem etwas breiteren Zwischenraum 23 eine Steuereinheit 2 angeordnet, die eine Fronttür 10 aufweist. Die Fronttür 10 kann geöffnet werden. Die Steuereinheit kann in einem Rahmen angeordnet sein, der der gegenseitigen Ausrichtung der Behälter 1 dient.

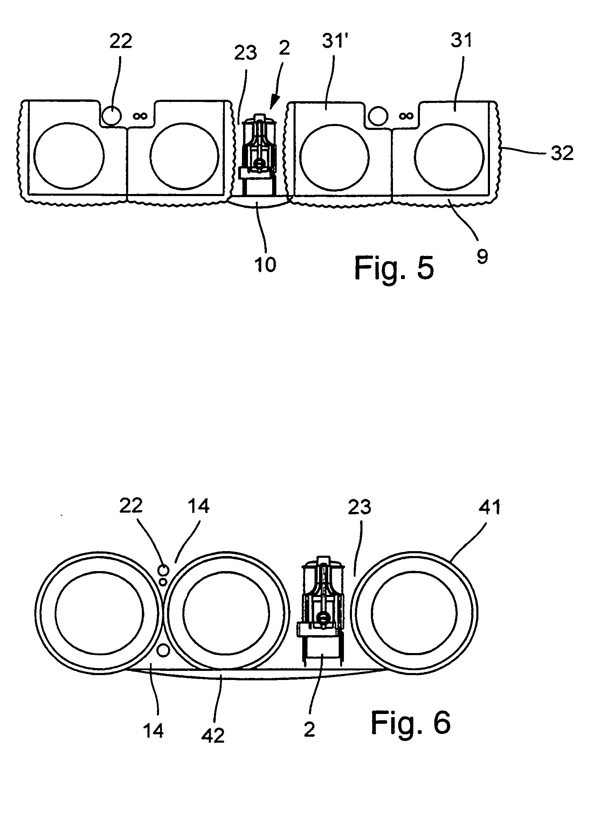

Während bei den bisher behandelten Ausführungsformen alle Behälter identisch aufgebaut sind, zeigt Figur 5 eine Anordnung mit vier Behältern, bei denen jeweils zwei Behälter 31, 31' spiegelbildlich zueinander ausgebildet sind. Dadurch weist jeweils nur eine Hinterkante jedes Behälters 31, 31' eine schachtartige Ausnehmung zur Unterbringung von Leitungen auf. Die Behälter 31,31' der Ausführungsform nach Figur 5 weisen dann auch zwei profilierte Außenseiten 9, 32 auf, so dass eine Anordnung aus den Behältern 31, 31' der Ausführungsform der Figur 5 auch in einem Raum aufgestellt werden kann, wo die Anordnung von mehreren Seiten aus sichtbar ist. Bei der Ausführungsform nach Figur 5 ist es auch möglich, einen aus zwei flächig aneinander anliegenden Behältern 31, 31' bestehenden Block Rückseite an Rückseite anzuordnen. In diesem Fall sind die Leitungen 22 innerhalb eines Schachts angeordnet, der nach außen nicht sichtbar ist.

Bei der Ausführungsform nach Figur 5 ist zwischen den beiden aus jeweils zwei Behältern bestehenden Blöcken in einem Zwischenraum 23 die Steuereinheit 12 untergebracht, ähnlich wie bei der Ausführungsform nach Figur 1.

Figur 6 zeigt eine weitere Ausführungsform, bei der die Behälter 41 einen runden Querschnitt aufweisen. Ihre gegenseitige Ausrichtung kann dann beispielsweise mit Hilfe von Abstandshaltern, Abstandslehren oder mit Hilfe von Schienen erfolgen, denen gegenüber die Behälter 41 ausgerichtet werden. Auf Grund der Kreisform ergeben sich auch bei direkt aneinander anliegenden Behältern Schächte 14, in denen die Leitungen 22 untergebracht sein können.

Zur Abdeckung der Schächte 14, die jetzt auch an der Vorderseite sein können, und des Zwischenraums 22 für die Steuereinheit 2 dient ein eigenes Paneel 42, dass vor die Einrichtung gesetzt wird. Das Paneel 42 braucht die äußeren Behälter 41 nicht vollständig abzudecken. Ihrer Außenseite kann mit in die optische Gestaltung der Anordnung einbezogen werden.

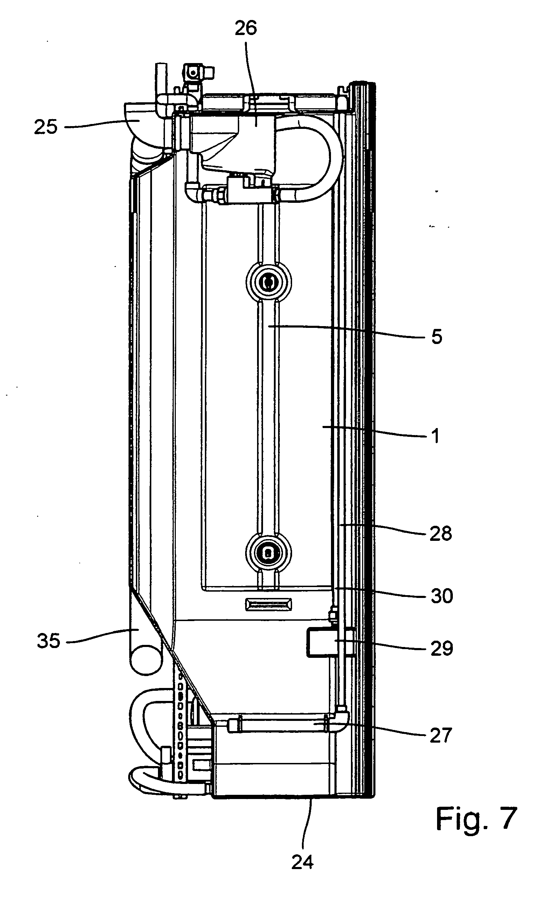

Figur 7 zeigt in einem schematischen Schnitt das Innere eines Behälters 1. Der Behälter enthält einen Boden 24, der die Unterseite des Behälters bildet. Mit diesem Boden 24 kann der Behälter 1 auf einer Unterlage stehen. In der von innen zu sehenden Seitenwand ist die Nut 5 zu sehen, in der an der Außenseite die Schiene 6 untergebracht ist.

Ein Anschlussstutzen 25 dient dem Eintritt des Grauwassers, das beispielsweise aus einer Badewanne oder einem Waschbecken stammt. An den Anschluss 25 schließt sich ein Filter 26 an, in dem das Grauwasser grob gefiltert wird. Von dort aus läuft das gefilterte Grauwasser in das Innere des Behälters. Im unteren Teil des Behälters, oberhalb des Bodens 24, ist ein Austrittselemente 27 für Luft angeordnet, die in das Austrittselement 27 über eine Leitung 28 gepumpt wird. Die Belüftungseinrichtung 27 dient dazu, die Luft in das in dem Behälter 1 vorhandene Grauwasser einzupumpen, um dieses zu belüften und umzuwälzen.

Weiterhin ist in dem Behälter eine Tauchpumpe 29 angeordnet, die über eine weitere Leitung 30 das teilweise gereinigte Wasser aus diesem Behälter in einen benachbarten Behälter pumpt.

In diesem benachbarten Behälter, in Figur 8 der zweite Behälter von rechts, befindet sich ebenfalls in gleicher Anordnung eine Einrichtung zum Belüften und Umwälzen des zu behandelnden Wassers und eine Tauchpumpe zum Überleiten des behandelten Wassers in den letzten Behälter, der in Figur 8 ganz links angeordnet ist.

Die Behälter sind alle identisch und mit entsprechenden Halterungen für die Leitungen, Pumpen und gegebenenfalls Filtereinrichtungen ausgestattet. Vorzugsweise sind die Behälter in einem Rotationsgussverfahren aus Kunststoff hergestellt. Sie können aber auch geblasen oder mit einem anderen Verfahren oder aus einem anderen Material hergestellt sein. Das Rotationsgussverfahren ermöglicht es, sehr komplexe Formen relativ billig an einem Stück herzustellen, wobei beispielsweise Befestigungseinrichtungen in Form von Nischen, Taschen, Verdickungen und dergleichen beim Herstellungsverfahren mit angegossen werden können, ebenso wie die Durchzüge, die im Schnitt in Figur 7 ebenfalls zu sehen sind.

Nun zu der Ansicht der Figur 8, die die Anordnung von hinten zeigt. Der in Figur 7 zu sehende Behälter weist ein Überlaufrohr 32 auf, das in dem bereits erwähnten Schacht 14 angeordnet ist. Das Überlaufrohr 32 stammt aus dem Überlaufbereich des Vorfilters 26. Das Überlaufrohr 32 ist verbunden mit weiteren Überlaufrohren 33 und 34, die die beiden rechts in Figur 8 stehenden Behälter an das Ablaufrohr 35 anschließen. Das Ablaufrohr 35 wird mit der Ablaufleitung der Hausinstallation verbunden.

Zwischen dem in Figur 8 linken Behälter und den beiden rechts stehenden Behälter ist die Steuereinheit angeordnet, die ebenfalls gegenüber den Behältern ausgerichtet und mit diesem verbunden ist. Unten in dem Zwischenraum ist die Druckpumpe 36 angeordnet, die über eine Leitung 37 das Wasser aus dem letzten Behälter 1 in eine Leitungen 38 pumpt. Die Leitung 38 führt zu dem Verbraucher. Im Bereich der Steuereinheit kann eine UV Lampe 39 angeordnet sein, an der vorbei oder durch die hindurch das Wasser aus dem zweiten Behälter in den dritten Behälter gepumpt wird. Eine Luftpumpe 40 ist oben angeordnet, die die bereits erwähnten Belüftungseinrichtungen mit Druckluft versorgt.

Unterhalt der Druckpumpe 36 sind zwei Schlammpumpen 42 angeordnet, die über entsprechende Leitungen 43, 44 den anfallenden Schlamm aus den beiden Behältern rechts in Figur 8 abziehen. Sie pumpen diesen Schlamm in einen Anschluss 45 des Ablaufrohrs 32 beziehungsweise 35.

Auf dem in Figur 8 links stehenden Behälter 1 ist noch die Möglichkeit einer Trinkwassereinspeisung bei 46 vorgesehen.

Alle Rohr- und Schlauchverbindungen sind vorzugsweise steckbar, so dass die Installation vor Ort leicht vorgenommen werden kann.

## Patentansprüche

1. Grauwasseranlage, mit
mindestens zwei Speicherbehältern (1, 31, 41) für Grauwasser, einer Steuereinheit (2) sowie mit Fluid- und Steuerverbindungen zwischen den Elementen der Anlage, wobei die Speicherbehälter (1, 31, 41) paarweise zusammenwirkende Mittel zum gegenseitigen Ausrichten je zweier Speicherbehälter (1, 31, 41) nebeneinander in lagerichtiger Position aufweisen , und wobei
zur mechanischen Verbindung der Speicherbehälter (1, 31,41) miteinander Verbindungsmittel vorgesehen sind, durch die die Speicherbehälter (1, 31, 41) in der ausgerichteten Position miteinander verbindbar sind, **dadurch gekennzeichnet, dass** die Steuereinheit (2) die gleichen Mittel zum Ausrichten mit mindestens einem Speicherbehälter (1, 31, 41) an mindestens einer Seite aufweist.

2. Grauwasseranlage nach Anspruch 1, bei der die Ausrichtmittel derart ausgebildet sind, dass sie sich selbst zentrieren.

3. Grauwasseranlage nach Anspruch 1 oder 2, bei der die Steuereinheit (2) in der ausgerichteten Position mit mindestens einem Speicherbehälter (1, 31, 41) mechanisch verbindbar ist.

4. Grauwasseranlage nach einem der vorhergehenden Ansprüche, bei der die Speicherbehälter (1, 31, 41) in der ausgerichteten Position flächig aneinander anliegen.

5. Grauwasseranlage nach einem der vorhergehenden Ansprüche, bei der die ausgerichteten Speicherbehälter (1, 31, 41) eine bündig verlaufende durchgehende Vorderfront aufweisen.

6. Grauwasseranlage nach einem der vorhergehenden Ansprüche, bei der die Speicherbehälter (1, 31, 41) als auf dem Boden stehende Einheiten ausgebildet sind.

7. Grauwasseranlage nach einem der vorhergehenden Ansprüche, bei der die Ausrichtmittel an den Seitenwänden (3) der Speicherbehälter (1, 31, 41) angeordnet und/oder ausgebildet sind.

8. Grauwasseranlage nach einem der vorhergehenden Ansprüche, bei der die Verbindungsmittel zur mechanischen Verbindung der Speicherbehälter (1, 31, 41) an der Oberseite, der Unterseite, der Vorderseite und/oder der Rückseite der Speicherbehälter (1, 31, 41) angreifen.

9. Grauwasseranlage nach einem der vorhergehenden Ansprüche, bei der die Verbindungsmittel zur mechanischen Verbindung der Speicherbehälter (1, 31, 41) an den einander zugewandten Seitenwänden (3) der Speicherbehälter (1, 31, 41) angreifen.

10. Grauwasseranlage nach einem der vorhergehenden Ansprüche, bei der die Speicherbehälter (1, 31, 41) Versteifungen zur Verhinderung des Aufwölbens der Seitenwände (3) aufweisen, die insbesondere durch einen die Seitenwände (3) innerhalb des Speicherbehälters (1, 31, 41) verbindenden Durchzug (18) gebildet sind, wobei vorzugsweise die Verbindungsmittel durch den Durchzug (18) hindurch greifen.

11. Grauwasseranlage nach einem der vorhergehenden Ansprüche, bei der die Speicherbehälter (1, 31, 41) derart ausgebildet und/oder angeordnet sind, dass sie in ausgerichteter Position Ausnehmungen für die für die Funktion der Anlage verwendbaren Elemente freilassen, wobei insbesondere die Ausnehmungen durch Abdeckungen abdeckbar sind.

12. Grauwasseranlage nach einem der vorhergehenden Ansprüche, bei der die Speicherbehälter (1, 31, 41) Anschlüsse für die Fluidikverbindung und/oder die Steuerverbindungen aufweisen, wobei insbesondere die Anschlüsse geschlossen sind und sich nachträglich öffnen lassen.

13. Grauwasseranlage nach einem der vorhergehenden Ansprüche, mit Halterungen an den Innenseiten und/oder Außenseiten der Speicherbehälter (1, 31, 41) zum Anbringen von Funktionsteilen der Anlage, die vorzugsweise in die Halterungen ohne Werkzeug einsetzbar sind.

14. Grauwasseranlage nach einem der vorhergehenden Ansprüche, bei der die Speicherbehälter (1, 31, 41) eine durch einen Deckel abdeckbare Öffnung (7) aufweisen, durch die hindurch Funktionsteile einbringbar sind.

15. Grauwasseranlage nach einem der vorhergehenden Ansprüche, bei der Fluidikverbindungen zwischen den Speicherbehältern (1, 31, 41) steckbar sind.

16. Grauwasseranlage nach einem der vorhergehenden Ansprüche, bei der die Speicherbehälter (1, 31, 41) aus Kunststoff bestehen, vorzugsweise einstückig, vorzugsweise im Rotationsgussverfahren herstellbar.

17. Grauwasseranlage nach einem der vorhergehenden Ansprüche, bei der alle Speicherbehälter (1, 31, 41) die gleiche Höhe und Tiefe aufweisen, und insbesondere gleich bzw. paarweise symmetrisch ausgebildet sind.

18. Grauwasseranlage nach einem der vorhergehenden Ansprüche, bei der die Speicherbehälter (1, 31, 41) derart dimensioniert sind, dass vier Speicherbehälter (1, 31, 41) oder drei Speicherbehälter (1, 31, 41) und eine Steuereinheit (2) auf eine Europalette passen.

19. Grauwasseranlage nach einem der vorhergehenden Ansprüche, bei der die Speicherbehälter (1, 31, 41) in verbundenem Zustand transportierbar sind.

20. Grauwasseranlage nach einem der vorhergehenden Ansprüche, bei der die Steuereinheit (2) in ihrem mit mindestens einem benachbarten Speicherbehälter (1, 31, 41) verbundenen Zustand geöffnet werden kann.

## Claims

1. Device for grey water, with
at least two storage tanks (1, 31, 41) for grey water, a control unit (2) and with fluid and control connections between the elements of the device, wherein the storage tanks (1, 31, 41) have pairwise cooperating means for the mutual orientation of in each case two storage tanks (1, 31, 41) juxtaposed and in the correct position, and wherein connecting means for mechanical interconnection of the storage tanks (1, 31, 41) are provided and by said means the storage tanks (1, 31, 41) are interconnectable in the oriented position,
**characterized in that**
the control unit (2) has the same means for orienting with at least one storage tank (1, 31, 41) at least on one side.

2. Device for grey water according to claim 1, wherein the orienting means are constructed in such a way that they are self-centring.

3. Device for grey water according to claim 1 or 2, wherein the control unit (2) in the oriented position is mechanically connectable to at least one storage tank (1, 31, 41).

4. Device for grey water according to any one of the preceding claims, wherein the storage tanks (1, 31, 41) engage flat with one another in the oriented position.

5. Device for grey water according to any one of the preceding claims, wherein the oriented storage tanks (1, 31, 41) have a flush, through front surface.

6. Device for grey water according to any one of the preceding claims, wherein the storage tanks (1, 31, 41) are constructed as units standing on the floor.

7. Device for grey water according to any one of the preceding claims, wherein the orienting means are arranged and/or constructed on the side walls (3) of the storage tanks (1,31, 41).

8. Device for grey water according to any one of the preceding claims, wherein the connecting means for mechanical connection of the storage tanks (1, 31, 41) are provided to engage on the top, bottom, front and/or back of the storage tanks (1, 31, 41).

9. Device for grey water according to any one of the preceding claims, wherein the connecting means for mechanical connection of the storage tanks (1, 31, 41) are provided to engage on the mutually facing side walls (3) of the storage tanks (1, 31, 41).

10. Device for grey water according to any one of the preceding claims, wherein the storage tanks (1, 31, 41) have stiffenings to prevent the bulging of the side walls (3), which are formed in particular by a through-member (18) linking the side walls (3) within the storage tank (1, 31, 41), wherein preferably the connecting means pass through the through-member (18).

11. Device for grey water according to any one of the preceding claims, wherein the storage tanks (1, 31, 41) are arranged and/or constructed such that in the oriented position they leave free recesses for the elements usable for the function of the device, wherein in particular the recesses can be covered by covers.

12. Device for grey water according to any one of the preceding claims, wherein the storage tanks (1, 31, 41) have couplings for fluidic connection and/or control connections, wherein in particular the couplings are closed and can be opened subsequently.

13. Device for grey water according to any one of the preceding claims, with holders on the insides and/or outsides of the storage tanks (1, 31, 41) for fitting of functional parts of the device, which preferably can be inserted in the holders without using a tool.

14. Device for grey water according to any one of the preceding claims, wherein the storage tanks (1, 31, 41) have an opening (7) which can be covered by a lid and through which the functional parts can be introduced.

15. Device for grey water according to any one of the preceding claims, wherein the fluidic connection between the storage tanks (1, 31, 41) is of the plug-in type.

16. Device for grey water according to any one of the preceding claims, wherein the storage tanks (1, 31, 41) are composed of synthetic material, preferably in one piece, preferably producible using the rotary casting process.

17. Device for grey water according to any one of the preceding claims, wherein all of the storage tanks (1, 31, 41) have the same height and depth, and in particular have an identical construction or are constructed in pairwise symmetrical manner.

18. Device for grey water according to any one of the preceding claims, wherein the storage tanks (1, 31, 41) are dimensioned in such a way that four storage tanks (1, 31, 41) or three storage tanks (1, 31, 41) and one control unit (2) fit onto a Euro-pallet.

19. Device for grey water according to any one of the preceding claims, wherein the storage tanks (1, 31, 41) are transportable in the connected state.

20. Device for grey water according to any one of the preceding claims, wherein the control unit (2) can be opened when it is connected to at least one adjacent storage tank (1, 31, 41).

## Revendications

1. Installation de traitement des eaux grises, comprenant
au moins deux réservoirs de stockage (1, 31, 41) pour les eaux grises, une unité de commande (2) ainsi que des liaisons de commande et fluidiques entre les éléments de l'installation, sachant que les réservoirs de stockage (1, 31, 41) présentent des moyens coopérant par paire destinés à aligner l'un sur l'autre respectivement deux réservoirs de stockage (1, 31, 41) côte à côte dans une position correcte, et que pour établir une liaison mécanique entre les réservoirs de stockage (1, 31, 41) sont prévus des moyens de liaison par lesquels les réservoirs de stockage (1, 31, 41) peuvent être reliés entre eux dans la position alignée,
**caractérisée en ce que**
l'unité de commande (2) présente sur au moins une face les mêmes moyens destinés à l'alignement sur au moins un réservoir de stockage (1, 31, 41).

2. Installation de traitement des eaux grises selon la revendication 1, dans laquelle les moyens d'alignement sont conçus de manière telle qu'ils se centrent eux-mêmes.

3. Installation de traitement des eaux grises selon la revendication 1 ou 2, dans laquelle l'unité de commande (2) en position alignée peut être reliée mécaniquement à au moins un réservoir de stockage (1, 31, 41).

4. Installation de traitement des eaux grises selon l'une des revendications précédentes, dans laquelle les réservoirs de stockage (1, 31, 41) en position alignée sont accolés face contre face.

5. Installation de traitement des eaux grises selon l'une des revendications précédentes, dans laquelle les réservoirs de stockage (1, 31, 41) alignés présentent une façade plane d'un seul tenant.

6. Installation de traitement des eaux grises selon l'une des revendications précédentes, dans laquelle les réservoirs de stockage (1, 31, 41) sont conçus en tant qu'unités posées sur le sol.

7. Installation de traitement des eaux grises selon l'une des revendications précédentes, dans laquelle les moyens d'alignement sont disposés et/ou formés sur les parois latérales (3) des réservoirs de stockage (1, 31, 41).

8. Installation de traitement des eaux grises selon l'une des revendications précédentes, dans laquelle les moyens de liaison pour la liaison mécanique des réservoirs de stockage (1, 31, 41) s'engagent sur la face supérieure, la face inférieure, la face avant et/ou la face arrière des réservoirs de stockage (1, 31, 41).

9. Installation de traitement des eaux grises selon l'une des revendications précédentes, dans laquelle les moyens de liaison pour la liaison mécanique des réservoirs de stockage (1, 31, 41) s'engagent sur les parois latérales (3) se faisant vis-à-vis des réservoirs de stockage (1, 31, 41).

10. Installation de traitement des eaux grises selon l'une des revendications précédentes, dans laquelle afin d'éviter le bombement des parois latérales (3), les réservoirs de stockage (1, 31, 41) présentent des renforcements qui sont en particulier formés par une traverse (18) reliant les parois latérales (3) à l'intérieur du réservoir de stockage (1, 31, 41), sachant que de préférence les moyens de liaison s'engagent en passant à travers ladite traverse (18).

11. Installation de traitement des eaux grises selon l'une des revendications précédentes, dans laquelle les réservoirs de stockage (1, 31, 41) sont formés et/ou disposés de manière telle qu'en position alignée, ils laissent ouverts des évidements pour les éléments utilisables pour la fonction de l'installation, sachant qu'en particulier les évidements peuvent être recouverts par des éléments de recouvrement.

12. Installation de traitement des eaux grises selon l'une des revendications précédentes, dans laquelle les réservoirs de stockage (1, 31, 41) présentent des raccords pour la liaison fluidique et/ou pour les liaisons de commande, sachant qu'en particulier les raccords sont fermés et peuvent être ouverts ultérieurement.

13. Installation de traitement des eaux grises selon l'une des revendications précédentes, avec des supports disposés sur les faces intérieures et/ou les faces extérieures des réservoirs de stockage (1, 31, 41), et destinés à fixer des éléments fonctionnels de l'installation, de préférence insérables dans lesdits supports sans outils.

14. Installation de traitement des eaux grises selon l'une des revendications précédentes, dans laquelle les réservoirs de stockage (1, 31, 41) présentent une ouverture (7) pouvant être fermée par un couvercle et à travers laquelle des éléments fonctionnels peuvent être introduits.

15. Installation de traitement des eaux grises selon l'une des revendications précédentes, dans laquelle des liaisons fluidiques peuvent être embrochées entre les réservoirs de stockage (1, 31, 41).

16. Installation de traitement des eaux grises selon l'une des revendications précédentes, dans laquelle les réservoirs de stockage (1, 31, 41) sont en matière synthétique, de préférence en une seule pièce, et de préférence fabricables par moulage par rotation.

17. Installation de traitement des eaux grises selon l'une des revendications précédentes, dans laquelle tous les réservoirs de stockage (1, 31, 41) présentent la même hauteur et la même profondeur, et sont en particulier conçus de manière identique ou symétrique par paires.

18. Installation de traitement des eaux grises selon l'une des revendications précédentes, dans laquelle les réservoirs de stockage (1, 31, 41) sont dimensionnés de sorte que quatre réservoirs de stockage (1, 31, 41) ou trois réservoirs de stockage (1, 31, 41) et une unité de commande (2) entrent sur une europalette.

19. Installation de traitement des eaux grises selon l'une des revendications précédentes, dans laquelle les réservoirs de stockage (1, 31, 41) sont transportables à l'état relié.

20. Installation de traitement des eaux grises selon l'une des revendications précédentes, dans laquelle l'unité de commande (2) peut être ouverte dans son état relié à au moins un réservoir de stockage (1, 31, 41) voisin.
